Europäisches Patentamt

European Patent Office

Office européen des brevets

(11) Publication number: **0 412 625 A1**

# EUROPEAN PATENT APPLICATION

(21) Application number: **90300404.2**

(51) Int. Cl.5: **B60B 33/00**

(22) Date of filing: **15.01.90**

(30) Priority: **04.08.89 GB 8917934**

(43) Date of publication of application:
**13.02.91 Bulletin 91/07**

(84) Designated Contracting States:
**DE DK FR GB IT SE**

(71) Applicant: **GUY-RAYMOND ENGINEERING COMPANY LIMITED**
**Rollesby Road**
**King's Lynn Norfolk PE30 4LX(GB)**

(72) Inventor: **Daniels, Raymond Robert James**
**Woodside, North Runcton**
**King's Lynn, Norfolk PE30 4LX(GB)**

(74) Representative: **Abbie, Andrew Kenneth et al**
**R.G.C. Jenkins & Co. 26 Caxton Street**
**London SW1H 0RJ(GB)**

(54) Castors.

(57) A castor has a body which comprises a hood 18 extending over the castor wheels and means defining a bore 38 for rotatably receiving a pivot pin for mounting the castor to a piece of furniture which means includes a tubular portion 20 extending from the side of the hood remote from the wheels. A collar member 22A is mounted on the hood over the tubular portion and is retained on the hood by a radially outwardly deformed portion 32 of the free end of the tubular portion which engages the collar member.

FIG.10.

EP 0 412 625 A1

## CASTORS

This invention relates to castors, and more particularly to castor comprising wheel means rotatably mounted to a body which comprises a hood extending over the wheel means and means defining a bore for rotatably receiving a pivot pin for mounting the castor to a piece of furniture, which means includes a tubular portion extending from the side of the hood remote from the wheel means.

Such a castor is disclosed in our British Patent Specification No. 2204233.

There is a need to provide such castors with tubular portions of different external diameters to make the castors more aesthetically compatible with the part of the piece of furniture to which they are fitted. Rather than provide separate moulds for moulding separate castor bodies which differ only in respect of the external configuration of the aforesaid tubular portion extending from the hood, the present invention recognises that a collar member which is moulded separately from the castor body may be mounted on the hood over the tubular portion and that by choosing a collar member of the appropriate external configuration th castor may be made more aesthetically compatible to the part of the furniture to which it is to be fitted. Thus, it is only necessary to provide a single body moulding which can be modified by using any one of a plurality of collar members.

An object of the present invention is to enable such a collar member to be reliably and simply retained on the hood of the castor body over the tubular portion thereof.

The invention includes a method of manufacturing a castor, including mounting a collar member on a hood of the body of the castor over a tubular portion thereof extending from the hood, and radially outwardly deforming at least a portion of the free end of the tubular portion over the collar member to retain the collar member on the hood.

The invention also includes a castor comprising wheel means rotatably mounted to a body which comprises a hood extending over the wheel means and means defining a bore for rotatably receiving a pivot pin for mounting the castor to a piece of furniture, which means includes a tubular portion extending from the side of the hood remote from the wheel means, and a collar member mounted on the hood over said tubular portion, at least one radially outwardly deformed portion of the free end of the tubular portion engaging the collar member to retain the collar member on the hood.

The collar member preferably comprises a tubular member having an internal diameter which is greater than the external diameter of said tubular portion of the body and positioning means connected to said tubular member for positioning said tubular member relative to said tubular portion, the or each said radially outwardly deformed portion engaging said positioning means on a side thereof remote from the hood.

In one embodiment the positioning means comprises a plurality of circumferentially spaced-apart ribs extending radially inwardly from said tubular member towards said tubular portion. Each of the abovementioned ribs preferably engages or at least extends closely to the tubular portion and the hood.

In this embodiment there is one radially outwardly deformed portion of the free end of the tubular portion which engages only some of the ribs at ends thereof remote from the hood.

The ribs engaged by the radially outwardly deformed portion include two diametrically opposite ribs.

In another embodiment the positioning means comprises a ring portion adjacent the tubular portion and means interconnecting the tubular portion and the ring portion adjacent the tubular portion and means interconnecting the tubular member and ring portion, the or each said radially outwardly deformed portion engaging the ring portion.

In order that the invention may be well understood, some embodiments thereof, which are given by way of example only, will now be described with reference to the accompanying drawings, in which:

Figures 1 to 3 are respectively side, front and top plan views of a two wheel castor;

Figure 4 schematically illustrates the fitting of a collar member to the body of the castor shown in Figure 1;

Figure 5 illustrates the castor with the collar member fitted to the body thereof;

Figure 6 is a cross-sectional view of one embodiment of a collar member;

Figures 7, 8 and 9 are respectively views of the same collar member taken in the direction of the arrows VII, VIII and IX in Figure 6;

Figure 10 is a fragmentary sectional view showing the collar member of Figures 6 to 9 fitted to the castor body;

Figure 11 is a view taken in the direction of the arrow XI in Figure 10;

Figures 12 and 13 illustrate a tool for deforming the tubular portion of the castor body, Figure 12 being a plan view of the tool and Figure 13 being a cross-sectional view taken along the line XIII-XIII in Figure 12.

Figure 14 is a cross-sectional view of an alternative collar member;

Figures 15 and 16 are views of the collar member shown in Figure 14 taken in the direction of the arrows XV and XVI thereof; and

Figures 17 and 18 correspond to Figures 10 and 11, but show the collar member illustrated in Figures 14 to 16 fitted to the carrier body, Figure 18 being a view taken in the direction of the arrow XVIII in Figure 17;

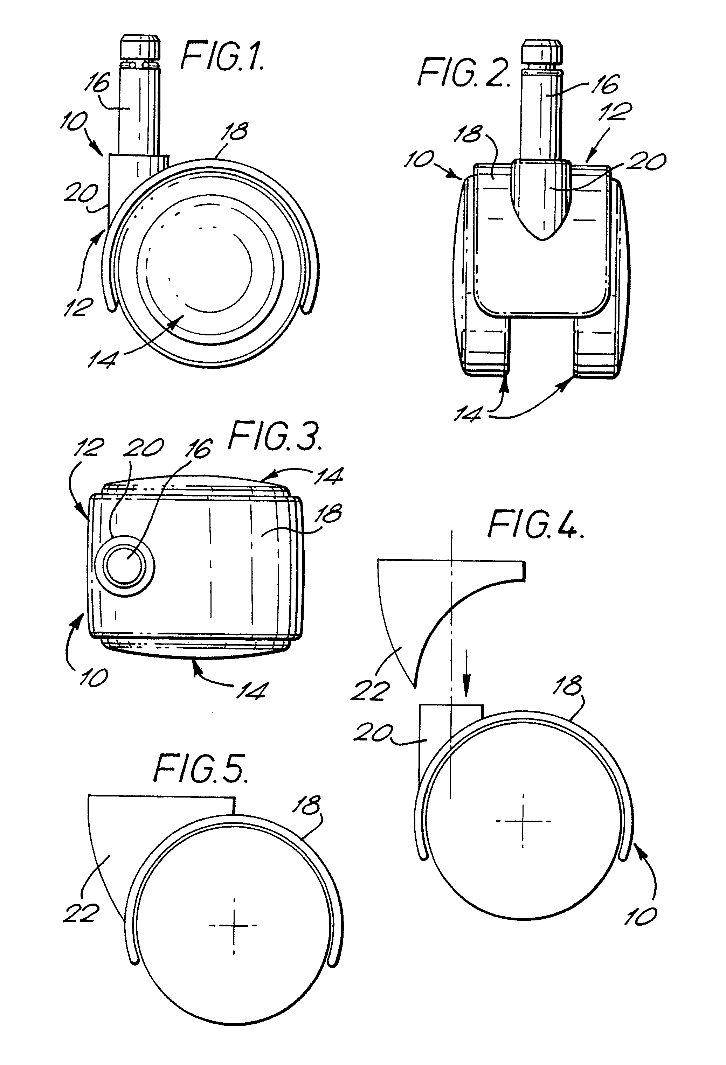

Referring first to Figures 1 to 3, the illustrated castor 10 generally comprises a body 12 of a plastics material, for example a polyamide, two plastics castor wheels 14 mounted to the body, and a pivot pin 16 extending from and rotatable in the body 12 for mounting the castor to a piece of furniture. The body 12 includes a hood 18 which extends over the wheel 14 and means defining a bore for rotatably receiving the pivot pin 16. These means include a tubular portion 20 extending from the side of the hood remote from the wheel 14. As thus far described, the castor 12 is disclosed in our aforementioned British Patent Specification 2204233.

Figure 4 schematically illustrates the mounting of a collar member 22 on the hood 18 over the tubular portion 20, and Figure 5 shows the completed assembly. The collar member 22 may have any one of a number of different external configurations, and by using a selected collar member the external appearance of the castor may be changed to suit aesthetic criteria.

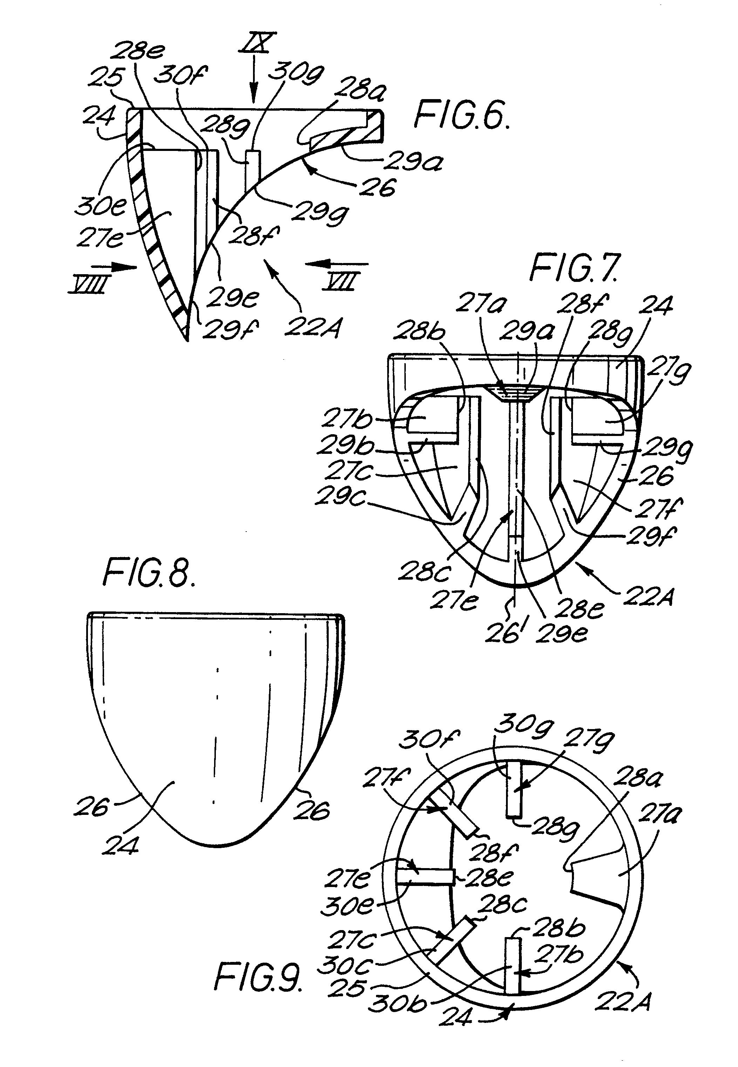

Referring now to Figures 6 to 9, there is shown a presently preferred collar member 22A. The collar member 22A is moulded from a plastics material such as a polyamide, and comprises a tubular member 24 having an internal diameter which is greater than the external diameter of the tubular portion 20 of the castor body. The tubular member has a circular upper edge 25 and a curved lower edge 26 which is shaped to seat on the hood 18 when the collar member is fitted over the tubular portion 20 with its axis 26'coaxial with the axis of the bore in the tubular portion 20. Positioning means are connected to the tubular member for positioning the tubular member relative to the tubular portion as aforesaid. In the collar member 22A the positioning means comprises a plurality of circumferentially spaced-apart ribs 27a-g extending radially inwardly from the tubular member 24 towards the tubular portion 20 when the collar member is fitted thereto. Each of the ribs 27a-g engages or extends closely to the tubular portion 20 and the hood 18. Specifically, in this embodiment radially inner edge surfaces 28a-g of the ribs engage the external surface of the tubular portion 20 and downwardly facing surfaces 29a-g of the ribs engage the hood. It will be noted that the rib 27a is wider than the other ribs and of less depth. It will also be noted that the other ribs 27b-g terminate short of the upper edge of the collar member with their top edges 30b-g at the same level.

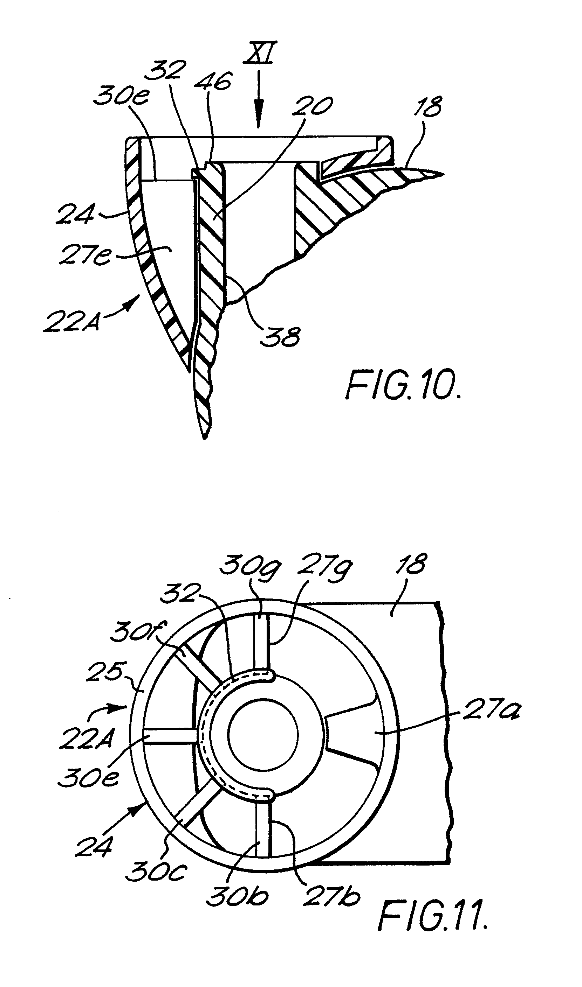

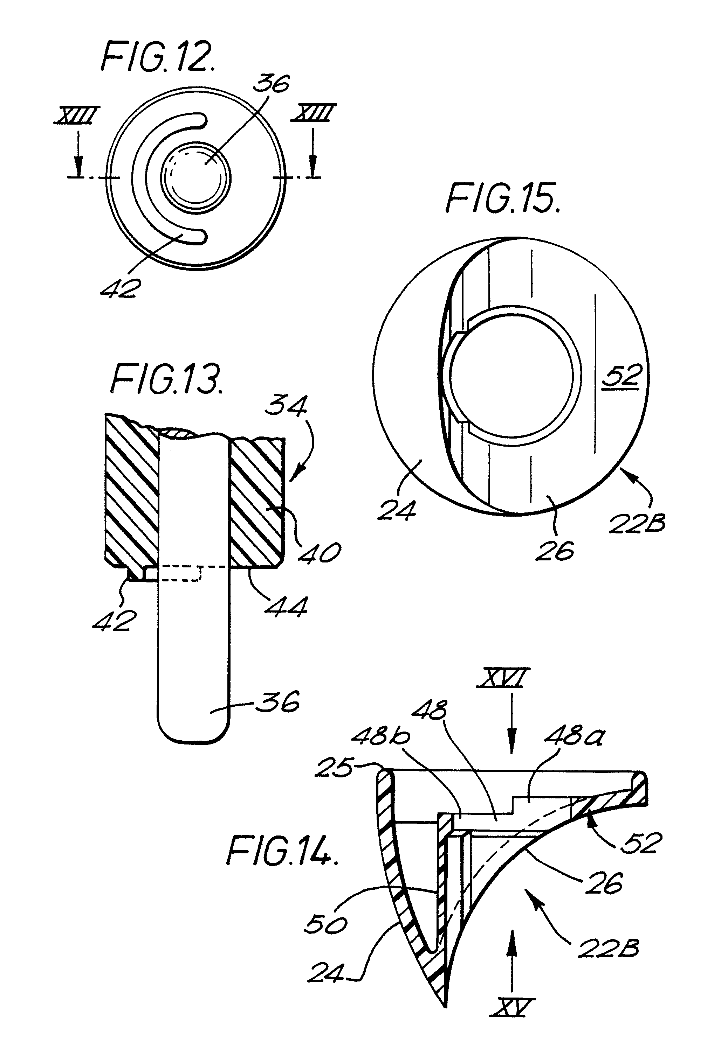

The collar member 22A is retained on the hood 18 by a radially outwardly deformed portion 32 of the free end of the tubular portion 20 as illustrated in Figures 10 and 11. Specifically, the radially outwardly deformed portion 32 engages the positioning means of the collar member 22A on the side thereof remote from the hood 18. As illustrated the radially outwardly deformed portion engages some of the ribs at the ends thereof remote from the hood. As illustrated, the ribs are engaged by the radially outwardly deformed portion at their top edges and include the two diametrically opposite ribs 27b and 27g, the radially deformed portion 22 being generally arcuate in form. Figures 12 and 13 show a tool 34 for providing the radially outwardly deformed portion 32 illustrated in Figures 10 and 11. The tool 34 comprises a spigot 36 insertable into the bore 38 in the tubular portion 20 of the castor body, on which spigot there is mounted an annular body 40 provided with an arcuate rib 42 on the end face 44 thereof from which the spigot 36 extends. It will be understood that the rib 42 engages the free end 46 of the tubular portion 20 when the spigot 36 is inserted in the bore 38 and deforms the portion 32 into contact with the top edges 30b-g of the ribs 37b-g such that the portion 32 acts to retain the collar member 22a on the hood 18.

Referring now to Figures 14 to 16, there is shown an alternative collar member 22B. The collar member 22B is moulded from a plastics material such as a polyamide and like the previously described collar member 22A comprises a tubular member 24 having an internal diameter which is greater than the external diameter of the tubular portion 20 of the castor body, a circular upper edge 25 and a curved lower edge 26 shaped to seat on the hood 18. The collar member 22B differs from the collar member 22A in that the positioning means which are connected to the tubular member 24 for positioning the tubular member relative to the tubular portion comprises a ringed portion 48 arranged to envelope the tubular portion 20 of the castor body and means interconnecting the tubular member 24 with the ring portion 48. The interconnecting means comprises an extension 50 of the ring 48 which extends to the lower edge 26 of the tubular member, a closure member 52 between the ring 48 and its extension 50 and the tubular member 24 across the curved lower edge 26 of the tubular member 24, and a plurality of circumferentially spaced-apart ribs 54a-c extending radially inwardly from the tubular member 24 and connected to the extension 50, and in the arrangement illustrated also to the ring portion 48.

The ring portion 48 is stepped axially at its upper portion into two parts 48a and 48b, with the latter terminating further away from the upper edge 25 of the collar member than the former.

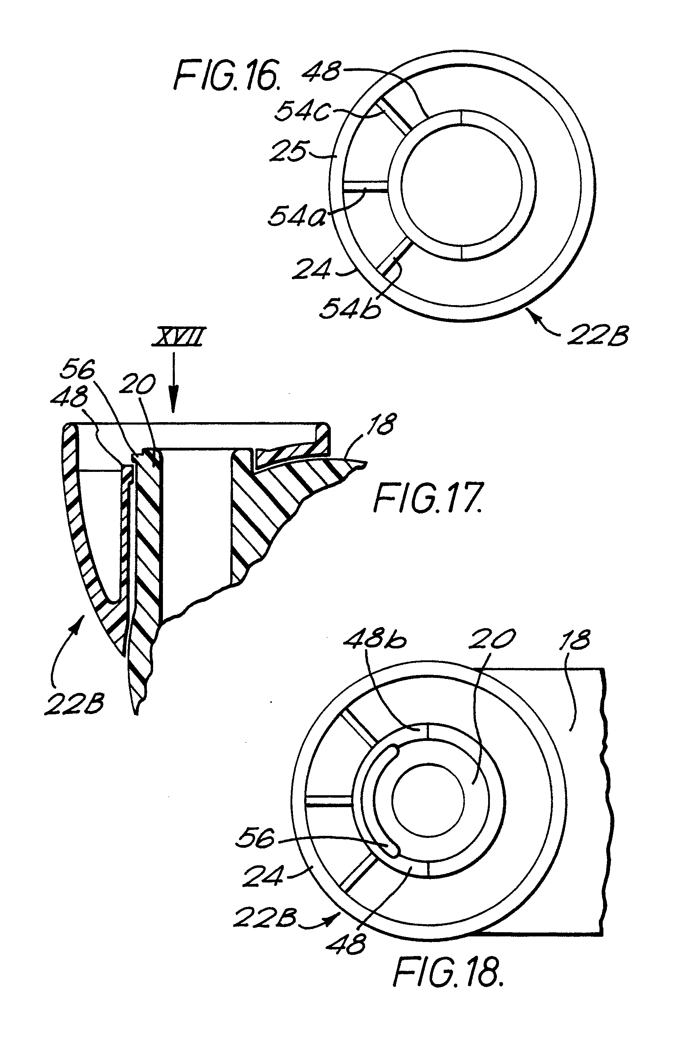

The collar member 22b is retained on the hood 18 by a radially outwardly deformed portion 56 of the free end of the tubular portion 20 as illustrated in Figures 17 and 18. This radially outwardly deformed portion engages a ring portion 48 and more particularly the part 48b of the ring portion. The deformation may be made using a tool similar to that shown in Figures 12 and 13 in the manner described with reference to those figures.

In the above-described embodiments a two-tone appearance may be achieved by moulding the body from a plastics material of one colour and moulding the collar member from a plastics material of a different colour or shade.

Similarly, a two-tone appearance may be achieved by moulding the body from a plastics material and forming the collar member from metal.

## Claims

1. A castor comprising wheel means rotatably mounted to a body which comprises a hood extending over the wheel means and means defining a bore for rotatably receiving a pivot pin for mounting the castor to a piece of furniture, which means includes a tubular portion extending from the side of the hood remote from the wheel means, and a collar member mounted on the hood over said tubular portion, at least one radially outwardly deformed portion of the free end of the tubular portion engaging the collar member to retain the collar member on the hood.

2. A castor as claimed in claim 1, wherein the collar member comprises a tubular member having an internal diameter which is greater than the external diameter of said tubular portion of the body and positioning means connected to said tubular member for positioning said tubular member relative to said tubular portion, the or each said radially outwardly deformed portion engaging said positioning means on a side thereof remote from the hood.

3. A castor as claimed in claim 2, wherein the positioning means comprises a plurality of circumferentially spaced-apart ribs extending radially inwardly from said tubular member towards said tubular portion.

4. A castor as claimed in claim 3, wherein each of said ribs engages or extends closely to the tubular portion and the hood.

5. A castor as claimed in claim 4, wherein a said radially outwardly deformed portion of the free end of the tubular portion engages only some of the ribs at ends thereof remote from the hood.

6. A castor as claimed in claim 5, wherein said ribs engaged by said radially outwardly deformed portion include two diametrically opposite ribs.

7. A castor as claimed in claim 2, wherein said positioning means comprises a ring portion adjacent the tubular member and means interconnecting the tubular portion and ring portion, the or each said radially outwardly deformed portion engaging the ring portion.

8. A method of manufacturing a castor, including mounting a collar member on a hood of the body of the castor over a tubular portion thereof extending from the hood, and radially outwardly deforming at least a portion of the free end of the tubular portion over the collar member to retain the collar member on the hood.

9. A castor as claimed in any one of claims 1 to 7 or a method as claimed in claim 8, wherein the body is moulded from a plastics material of one colour and the colour member is moulded from a plastics material of a different colour or shade.

10. A castor as claimed in any one of claims 1 to 7 or a method as claimed in claim 8, wherein the body is moulded from a plastics material and the collar member is formed from metal.

FIG.1.

FIG.2.

FIG.3.

FIG.4.

FIG.5.

FIG.6.

FIG.7.

FIG.8.

FIG.9.

FIG.10.

FIG.11.

FIG.12.

36

XIII

XIII

42

FIG.15.

52

24

26

22B

FIG.13.

34

40

42

44

36

XVI

48

48b

48a

25

52

26

FIG.14.

50

24

22B

XV

FIG.16. 48

54c

25

54a

24

54b

22B

XVII

56
48 20

18

FIG.17.

22B

48b 20 18

56

24

22B

48

FIG.18.

European
Patent Office

**EUROPEAN SEARCH
REPORT**

Application Number

**EP 90 30 0404**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 509 227 (KEANE) <br> * column 2, line 62 - column 3, line 3; figure 2 * <br> – – – | 1 | B 60 B 33/00 |
| A | FR-A-2 167 764 (GUY-RAYMOND ENGINEERING) <br> * page 2, lines 19 - 36; figure 5 * <br> – – – | 1 | |
| A | GB-A-1 496 170 (BAGGS) <br> * page 2, lines 36 - 77; figures 2, 3 * <br> – – – | 1,3 | |
| A | EP-A-0 242 756 (ALBERT SCHULTE) <br> * page 6, line 23 - page 7, line 6; figure 5 * <br> – – – | 1 | |
| A | GB-A-1 507 290 (DEUTSHER) <br> * page 2, lines 59 - 76; figures 2, 3-6 * <br> – – – – – | 1 | |

|  |
|---|
| TECHNICAL FIELDS SEARCHED (Int. Cl.5) |
| B 60 B <br> 63 A |

The present search report has been drawn up for all claims

| Place of search | Date of completion of search | Examiner |
|---|---|---|
| The Hague | 05 November 90 | AYITER I. |